Europäisches Patentamt

European Patent Office

Office européen des brevets

(11) Publication number: **0 483 434 A1**

# EUROPEAN PATENT APPLICATION

(21) Application number: **90480170.1**

(22) Date of filing: **31.10.90**

(51) Int. Cl.⁵: **G06F 1/00**, G06F 11/00, G06F 15/16

(43) Date of publication of application:
**06.05.92 Bulletin 92/19**

(84) Designated Contracting States:
**DE FR GB**

(71) Applicant: **International Business Machines Corporation**
**Old Orchard Road**
**Armonk, N.Y. 10504(US)**

(72) Inventor: **Fermier, Yvan**
**22, rue Jean Macé**
**F-83550 Vidauban(FR)**

Inventor: **Ferry, Michel**
**52, Allée des Micocouliers, Hameau de Puissanton**
**F-06220 Vallauris(FR)**
Inventor: **Vachee, Pierre, Villa "La Cariatide"**
**46, Avenue des Oliviers, Le Plan du Bois**
**F-06610 La Gaude(FR)**

(74) Representative: **Lattard, Nicole**
**Compagnie IBM France Département de Propriété Intellectuelle**
**F-06610 La Gaude(FR)**

(54) **Apparatus for determining and reporting identification information relative to devices pluggable to a central unit.**

(57) An apparatus for determining and reporting identification information relative to devices which are pluggable to a control unit through connectors (2-1 to 2-2) of a connecting card comprises a digital to analog converter (36) which receives the identification information from the connectors to which devices are plugged, at its inputs. The converter generates an analog voltage therefrom, the value of which is representative of the identification information of the plugged devices. The analog voltage is transmitted to the central unit 8 which comprises an analog to digital converter (52) for measuring and deducing the configuration of the plugged devices from the measured value.

This apparatus allow the identification information to be reported to the central unit in an efficient way, more specifically when the connecting card is remote from the central unit.

FIG.1

The present invention relates to an apparatus for determining and reporting information to a central unit, where said information is relative to the identification of devices which can be optionally plugged to the central unit and more specifically to such an apparatus which can be used when the devices are remote from the central unit and the identification information comprise at least the presence and positions of the devices and possibly the power ON/OFF status of the devices.

Background Art

Presently known apparatuses used for determining the presence of devices for example boards such as described in the article: "Interrogation tells microprocessor which boards are present" published in the review EDN on February 4, 1981 page 88 or peripheral devices connected to a data processor such as described in the patent U.S.A. A-4,079,452 need that the boards or peripheral devices are scanned through a microprocessor or a programmable controller module to determine whether they are present and possibly get an identification of their operating mode.

A major drawback of these apparatuses is that at least one wire per device is needed to get the presence indication in addition to the address wires which are needed to address each device for performing the scanning operation.

Consequently, the implementation of such apparatuses in a system comprising devices remotely connected to a central unit would lead to a cumbersome and costly design because of the number of wires required to address the devices and report their statuses.

In addition, these apparatuses only detect the presence of powered ON or operable devices able to recognize their addresses when they are scanned and able to send information to the central unit.

Summary of the Invention

An object of the present invention is to provide an apparatus for determining and reporting information relative to devices pluggable to a central unit, in a efficient way.

Another object of the present invention is to provide such an apparatus for determining whether devices which can be optionally connected to a central unit at a remote location are effectively plugged or not and for determining the positions of the plugged devices.

Another object of the present invention is to provide such an apparatus which makes use of a limited number of wires.

Another object of the present invention is to provide such an apparatus which is able to detect whether the devices are plugged, even if they are not powered ON and to report their power ON/OFF statuses to the central unit.

The apparatus according to the present invention is used for determining and reporting identification information relative to devices, in a system comprising at least a central unit which can be connected to a variable number of devices through a connecting means including a number of connectors arranged at positions which can be located by the central unit, said number being at least equal to the maximum number of devices which can be connected to the central unit. The connection of a device is performed by plugging said device into a connector so that the plugged device provides its identification information to identification pins of the connector. The apparatus comprises:

- converting means which, in a preferred embodiment of the invention, include a digital to analog converter having inputs connected to the identification pins for generating an analog magnitude on its output, said analog magnitude having a value which depends upon the identification information provided by the connectors to which devices are plugged,
- means for providing the analog magnitude at the output of the converting means to an input of the control unit,
- interpreting means connected to said input for interpreting the value of the analog voltage and deducing the identification information therefrom.

The apparatus according to the present invention is preferably used in a system wherein the connecting means are remote from the central unit.

In a specific application of the invention the identification information provided to the identification pins of a connector indicate whether a device is plugged or not to said connector and the position of the connector.

Brief Description of the Figures

Figure 1 represents the block diagram of the apparatus of the present invention.

Figure 2 represents the apparatus of the present invention in more details.

Detailed Description of the Invention

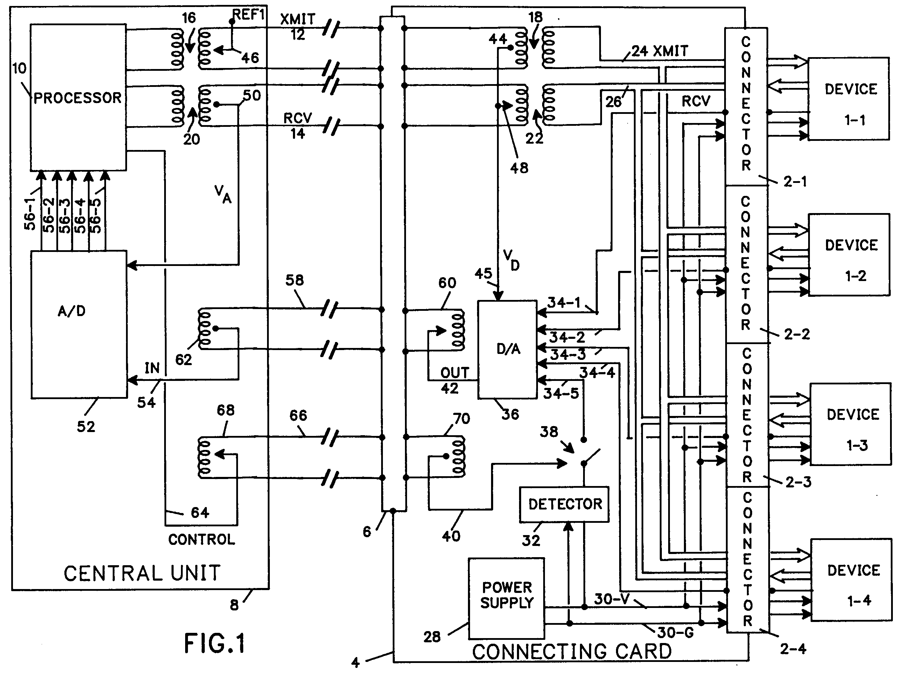

The Figure 1 shows the environment in which the apparatus according to the present invention is preferably used.

In the detailed description of the invention it will be assumed that the identification information comprises the presence and positions of devices which are pluggable at a remote location from the central unit, and also the power ON/OFF status of the plugged devices upon request from the central unit.

The function of the apparatus shown in Figure 1 is to determine how many devices such as 1-1, 1-2, 1-3 and 1-4 are plugged to connectors 2-1, 2-2, 2-3 and 2-4 respectively, the positions i.e. the connectors to which devices are plugged and the power ON/OFF status of the devices.

For the sake of clarity, only four devices are shown in the figure 1, it will be obvious for the man skilled in the art to implement the concept of the present invention in any other environment.

The connectors 2-1 to 2-4 are the edge connectors of a connecting card 4, they allow the devices 1-1 to 1-4 to be connected when they are plugged to the connectors, to a central unit 8 through another connector 6.

The central control unit 8 comprise any type of information processing system shown as a processor 10 which can be coupled to the remote devices through receive and transmit wire pairs 12 and 14 for processing information received from or to be transmitted to the remote devices. For this purpose, the processor must know the number and positions of the plugged devices.

Since the devices are remote from the central unit, the transfers of information between the remote devices and the central unit are performed through transformers 16 and 20 located in the central unit 8 and 18 and 22 located in the connecting card 4.

The information signals are generated by processor 10 and provided to the primary winding of transformer 16. The transmit wire pair 12 is connected to the secondary winding of transformer 16 on the central unit side and to the primary winding of transformer 18 on the connecting card side. The information signals transmitted by the central unit are received on the terminals of the secondary winding of transformer 18 and provided to the devices 1-1 to 1-4 which are plugged to connectors 2-1 to 2-4 through bus 24.

Inversely, on the connecting card side the remote devices 1-1 to 1-4 when plugged to the connectors 2-1 to 2-4 provide information signals through bus 26 to the primary winding of transformer 22. These signals are provided to the terminals of the secondary winding of transformer 22 connected to receive wire pair 14. On the central unit side, the receive wire pair 14 is connected to the terminals of the primary winding of transformer 20 so that the information signals are generated on the secondary winding of transformer 20 and provided to processor 10.

The transformers 16, 18, 10 and 22 provide for the galvanic isolation of the central unit 8 and remote devices 1-1 to 1-4.

In the preferred embodiment of the invention, the remote devices are connected to the central unit in a multipoint configuration through buses 24 and 26 and connectors 2-1 to 2-4 as schematically shown in Figure 4.

The remote devices are powered from a common power supply 28 located on the connecting card, which generates the power supply voltage on lines 30 connected to supply pins of connectors 2-1 to 2-4. The lines 30 comprise line 30-G which is the ground line and line 30-V which is at the supply voltage V.

A detector 32 senses the presence of the supply voltage on line 30-V in order to detect whether the remote devices once plugged to the connectors 2 are powered or not.

The plugging of a device 2-1 to 2-4 causes input signals to be provided to inputs 34-1 to 34-4 of digital to analog converter 36.

In the preferred embodiment of the present invention the input 34-5 corresponding to the least significant bit LSB of digital to analog converter 36 is connected to the output of detector 32 through switching device 38 which is closed by a control signal generated from the central unit 8 on line 40 when testing the power ON/OFF status of the remote devices is desired.

Digital to analog converter 36 generates an analog output signal on its output line 42, the magnitude of which is representative of the number and of the positions of the plugged devices, and also indicative of their power ON/OFF statuses when switch 38 is closed. In a preferred embodiment of the invention, the analog output signal is an analog current.

In order to reduce the number of wires, the reference voltage VD required for operating the digital to analog converter 36 is generated at the center tap 44 of the primary transformer 18 from a reference voltage Vref applied at the central unit side to the center tap 46 of secondary winding of transformer 16.

The reference voltage VD at the center tap 44 is applied to the reference input 45 of D/A converter 36.

The reference voltage VD is also applied at the center tap 48 of the primary winding of transformer 22 for generating a reference voltage VA at the center tap 50 of secondary winding of transformer 20.

At the central unit side, a circuit interprets the analog current and deduces the configuration of plugged devices therefrom. In the preferred embodiment this circuit is an analog to digital converter 52 in the central unit 8 converts the analog current at the output 42 of digital to analog converter 36 provided to the input line 54 of converter 52 into a binary value on its output lines 56-1 to 56-5, which represents the configuration and status of the plugged devices. This binary value is provided to the processor 10 which makes use of it for whatever purpose, such as addressing the plugged devices.

For the purpose of performing the conversion of the analog voltage, the analog to digital converter 52 is provided with the reference voltage VA which is derived from the reference voltage VD.

The analog current on output line 42 of converter 36 is provided to the input line 54 of converter 52 through the wire pair 58 connected at its ends to the windings 60 and 62 located at the control unit side and connecting card side.

In the same way, the control signal issued from the processor 10 on line 64 for controlling the closing of switch 36 in order to detect the power ON/OFF status of the plugged remote devices 1-1 to 1-5, is carried by a wire pair 66 connected at its ends to windings 68 and 70 located at the control unit side and connecting card side, respectively.

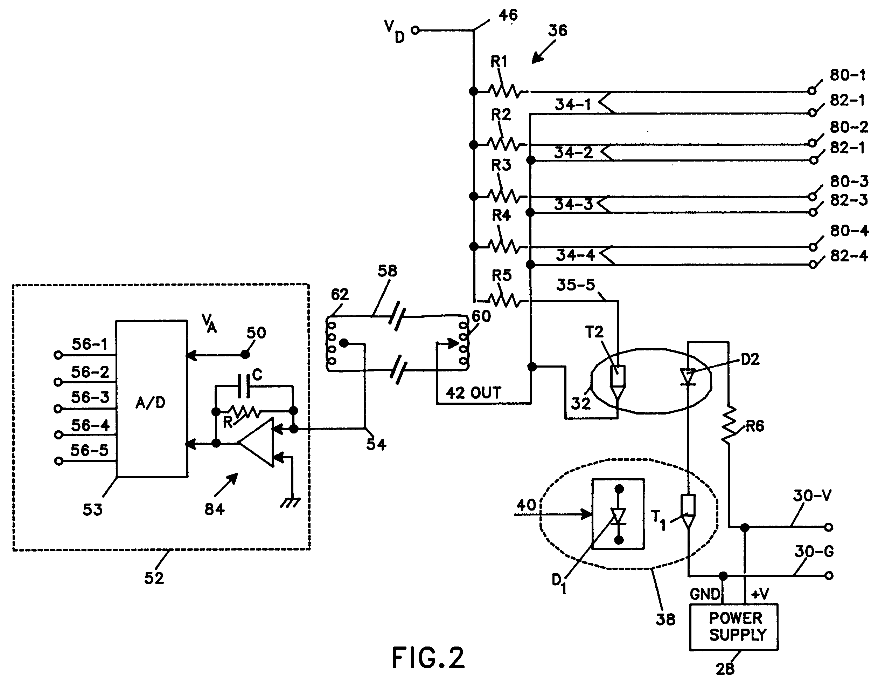

A specific implementation of the apparatus of the subject invention is shown in Figure 2.

Digital to analog converter 36 comprises a network of weighted resistors R1, R2, R3, R4 and R5 having two terminals, with one terminal of each resistor commonly connected to the reference voltage VD on line 45. The other terminal of resistors R1 to R4 is connected to one pin 80-1 to 80-4 of connectors 2-1 to 2-4 respectively.

Pins 82-1 to 82-4 are provided in connectors 2-1 to 2-4. The pins 82-1 to 82-4 are commonly connected to the output 42 of digital to analog converter 36.

When a device 1 is plugged into a connector 2 the corresponding pins 80 and 82 are shorted. This puts the resistor connected to the pin 80 into the resistor network.

In devices 1.1 to 1.4, the shorts between pins 80 and 82 have no interconnection with the rest of the circuits constituting said devices, thus providing the galvanic isolation relative to the central unit 8.

Resistor R5 is the weighted resistor which corresponds to the least significant bit of the converter 36. It is put into the resistor network under control of the signal on the control line 40.

The power supply 28 provides an output voltage V and ground voltage on output lines 30-V and 30-G respectively, connected to the voltage supply pins of connectors 2-1 to 2-4.

The switch 38 and the detector 32 are made with two opto-electronic couplers, the purpose of which is to provide galvanic isolation between the power supply on one side and control and R5 on the other side. The light emitting diode D1 in opto-electronic coupler 38 is forwarded biased by the control signal on line 40 to switch on transistor T1 of opto-electronic coupler. The transistor T1 of opto-electronic coupler 38 had its emitter connected to line 30-G and its collector connected to the cathode of light-emitting diode D2 in opto-electronic coupler 32.

The anode of light emitting diode D2 is connected to line 30-V through resistor R6. The emitter of transistor in opto-electronic coupler 32 is connected to output line 42 of converter 36 and its cathode is connected to the terminal of resistor R5.

Thus, if the power supply 28 is operative when the control signal on line 40 is active, diode D1 is forward biased and the transistor T1 is ON. As a result, diode D2 is forward biased and transistor T2 is ON and resistor R5 is put into resistor network of converter 36.

If the power supply 28 is inoperative, resistor R5 is not put into the resistor network and the analog current generated on line 42 reflects the inoperative status of the power supply 28.

On the control unit side, the analog current on line 54 is provided converted into an analog voltage to the analog to digital converter 53 by means of operational amplifier 84. Converter 52 is a conventional circuit arranged in a conventional way.

The bit pattern which is generated on the output lines 56-1 to 56-4 is representative of the number of plugged devices and of the connectors to which they are plugged. In addition the power ON/OFF status is indicated by the value of the bit on output line 56-5, when the control signal on line 64 is activated.

If the devices 1-1 to 1-4 were powered from separate power supplies it would be necessary to provide an input to the converter 36, (such as 35-5) for detecting the power ON/OFF status of each device.

If required by the specific environment into which the apparatus of the present invention is embodied, more information could be reported to the central unit by using converting means such as 36 ad 52 provided with a number of inputs and outputs respectively, chosen in accordance with the number of identification information to be reported.

**Claims**

1. Apparatus for determining and reporting identification information relative to devices (1-1 to 1-4) in a system comprising at least a central unit (8) which can be connected to a variable number of devices through a connecting means (4) including a number of connectors arranged at positions which can be located by the central unit, said number being at least equal to the maximum number of devices which can be connected to the central unit, the connection of a device being performed by plugging said device into a connector so that the plugged device provides its identification information to identification pins (80-82) of the connector said apparatus being characterized in that it comprises:

- converting means (36) having inputs (34) connected to the identification pins for generating an analog magnitude on its output (42), said analog magnitude having a value which depends upon the identification information provided by the connectors to which devices are plugged,
- means (58) for providing the analog magnitude at the output of the converting means to an input of the control unit,
- interpreting means (52) connected to said input for interpreting the value of the analog magnitude and deducing the identification information therefrom.

2. An apparatus according to claim 1 characterized in that it is used in a system wherein the connecting means (4) are remote from the central unit.

3. An apparatus according to claim 1 or 2 characterized in that the identification information provided to the identification pins of a connector indicate whether a device is plugged or not to said connector and the position of the connector.

4. An apparatus according to claim 3 characterized in that the converting means (36) comprise a digital to analog converter, the inputs (34-1 to 34-5) of which are connected to the identification pins of the connector and which generates on its output (42) the analog magnitude.

5. An apparatus according to claim 4 characterized in that the converting means comprise a number of resistor means (R1 to R5) equal to the number of identification pins of the connectors with a one to one relationship between the resistor means and identification pins, and each resistor means having a first terminal connected to a first reference voltage (VD) and a second terminal connected to an assigned identification pin in such a way that when devices are plugged to connectors the second terminal of the resistor means assigned to the identification pins of said connectors are connected to the digital to analog converter output.

6. An apparatus according to claim 5 characterized in that the resistor means have weighted resistances.

7. An apparatus according to claim 6 characterized in that the interpreting means comprise an analog to digital converter (52) having an input (54) connected to the output (42) of the digital to analog converter through connection means (58,60,62).

8. An apparatus according to any one of claim 2 to 6 characterized in that the system comprises supply voltage generating means (28) which provides supply voltages on output lines (30) to supply pins of the connectors in order to power the plugged devices, said supply pins being supply identification pins connected to inputs of the converting means to determine the power ON/OFF status of the plugged devices.

9. An apparatus according to claim 8 characterized in that it comprises switching means (38) having a close and open status controllable by the central unit to connect the inputs assigned to the supply identification pins of the converting means to the supply identification pins upon request from the central unit.

10. An apparatus according to claim 9 characterized in that the switching means comprise opto-electronic couplers.

11. An apparatus according to anyone of claim 5 to 10 characterized in that the devices are connected to the connecting means by:

a first wire pair (12) having a first end and a second end, with the first end connected to a first winding of a first transformer (16), the second winding of which receives information to be sent by the central unit to the devices and the second end connected to the first winding of a second transformer (18) the second winding of which provides the information received from the central unit to the devices, said first winding of said first transformer being provided with a center tap (46) connected to a second reference voltage (REF1) and the first winding of the second transformer being provided with a center tap (44) at which is derived the first reference voltage (VD).

12. An apparatus according to claim 11 characterized in that the devices are connected to the connecting means by:

a second wire pair (14) having a first end and a second end, with the first end connected to the first winding of a third transformer (22), the second winding of which receives information to be sent by the devices to the central unit and the second end connected to the first winding of a fourth transformer (20) the second winding of which provides the information received from the devices to the central unit, the first winding of the third transformer being provided with a center tap (48) connected to a center tap of the first winding of the second transformer and the first winding of the fourth transformer being provided with a center tap (50) at which is generated a third reference voltage (VA) provided to the interpretating means.

FIG.1

EP 0 483 434 A1

FIG.2

EP 0 483 434 A1

European Patent
Office

# EUROPEAN SEARCH REPORT

Application Number

EP    90 48 0170

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 041 406 (HONEYWELL) December 9, 1981<br>* page 2, line 9 - page 5, line 14; claims 1-2; figures 1-3 *<br>--- | 1-2 | G06F1/00<br>G06F11/00<br>G06F15/16 |
| A | PATENT ABSTRACTS OF JAPAN<br>vol. 9, no. 299 (P-408)(2022) November 27, 1985<br>& JP-A-60 135 777 (FANUC ) July 19, 1985<br>* the whole document *<br>--- | 1-2 | |
| A | PATENT ABSTRACTS OF JAPAN<br>vol. 11, no. 109 (P-564)(2556) April 7, 1987<br>& JP-A-61 256 448 (YAMATAKE HONEYWELL ) November 14, 1986<br>* the whole document *<br>--- | 1 | |
| A | EP-A-0 131 229 (SIEMENS) January 16, 1985<br>* page 2, line 30 - page 3, line 27; figure *<br>--- | 1,4 | |
| A | IBM TECHNICAL DISCLOSURE BULLETIN.<br>vol. 30, no. 10, March 1988, NEW YORK US<br>pages 126 - 127; 'use of engineering change levels for diagnosing card imcompatibility probl <br>'<br>* the whole document *<br>--- | 1,5-6 | **TECHNICAL FIELDS SEARCHED (Int. Cl.5 )**<br><br>G06F<br>G08C |
| A | DE-A-2 738 833 (SIEMENS) March 15, 1979<br>* page 4, line 4 - page 5, line 37; figures 1-2 *<br>----- | 1,4 | |

The present search report has been drawn up for all claims

| Place of search | Date of completion of the search | Examiner |
|---|---|---|
| THE HAGUE | 26 JUNE 1991 | GUIVOL Y. |

EPO FORM 1503 03.82 (P0401)